# EUROPÄISCHE PATENTSCHRIFT

(11) **EP 2 262 373 B1**
(45) Veröffentlichungstag und Bekanntmachung des Hinweises auf die Patenterteilung: **27.01.2016**
(21) Anmeldenummer: 09732007.1
(22) Anmeldetag: 11.04.2009
(51) Int. Cl.: A21C 15/02

(54) **ANLAGE ZUM HERSTELLEN VON SANDWICHKEKSEN UND DERGLEICHEN**
SYSTEM FOR THE PRODUCTION OF SANDWICH COOKIES AND THE LIKE
ÉQUIPEMENT POUR PRODUIRE DES GÂTEAUX SANDWICHS ET SIMILAIRES

(30) Priorität: 16.04.2008 AT 6022008
(43) Veröffentlichungstag der Anmeldung: 22.12.2010
(73) Patentinhaber: Haas Food Equipment GmbH, 1210 Wien (AT)
(72) Erfinder: HAAS, Johann, A-3400 Klosterneuburg (AT); JIRASCHEK, Stefan, A-2202 Königsbrunn (AT); HAAS, Joseph, Jun., A-1210 Wien (AT); HAAS, Johannes, A-1040 Wien (AT); JIRASCHEK, Christoph, A-1020 Wien (AT)
(74) Vertreter: Grabherr, Claudia
(86) Internationale Anmeldenummer: PCT/EP2009/002703
(87) Internationale Veröffentlichungsnummer: WO 2009/127380

(56) Entgegenhaltungen:
- EP-A2- 0 906 726
- DE-A1- 1 532 908
- DE-A1- 3 928 864
- DE-B1- 1 532 363
- GB-A- 2 120 516
- US-A- 2 868 141
- US-A- 4 513 656

## Beschreibung

Die Erfindung bezieht sich auf eine Anlage zum Herstellen von Sandwichkeksen und dergleichen, bei welcher in einem langgestreckten Maschinengestell entlang einer Sandwichingstrecke eine mit einem Keksmagazin versehene erste Kekszuführeinrichtung für die unteren Kekse, eine mit einem zylindrischen Streichkopf versehene Streicheinrichtung eine mit einem Keksmagazin versehene zweite Kekszuführeinrichtung für die oberen Kekse und eine Kalibriereinrichtung für die Sandwichkekse hintereinander angeordnet sind und im Maschinengestell eine langgestreckte Keksfördereinrichtung vorgesehen ist, die einen der ersten Kekszuführeinrichtung vorgelagerten Anfangsabschnitt besitzt und sich entlang der Sandwichingstrecke bis zur Kalibriereinrichtung für die Sandwichkekse erstreckt.

Bei einer bekannten Anlage dieser Art (DE 1 103 861 B1) ist die Fördereinrichtung mit stationären Gleitschienen für die Kekse und mit die Kekse entlang den Gleitschienen verschiebenden, auf einer umlaufenden endlosen Kette befestigten, fingerförmigen Mitnehmern versehen. Die Fördereinrichtung sieht für den Transport der oberen und unteren Kekse getrennte Gleitschienen vor. Die Fördereinrichtung sieht zwei Hauptgleitschienen vor, die in einer horizontalen Ebene vom Keksmagazin der ersten Kekszuführeinrichtung zum Streichkopf der Streicheinrichtung führen, wo die unteren Kekse an der Oberseite mit einer Füllmasse versehen werden. Nach dem Streichkopf verlaufen die Hauptgleitschienen schräg nach unten und dann wieder ein Stück horizontal in einigem Abstand unter dem Keksmagazin der zweiten Kekszuführeinrichtung hindurch. Für die oberen Kekse sind über den beiden Hauptgleitschienen zwei Hilfsgleitschienen vorgesehen, die in einer horizontalen Ebene vom Keksmagazin der zweiten Kekszuführeinrichtung bis zu einer Deckelungsstation verlaufen, wo die Hilfsgleitschienen enden und die oberen Kekse auf die an der Oberseite mit einer Füllmasse versehenen, unteren Kekse abgelegt werden. Die in der Deckelungsstation entstandenen Sandwichkekse werden von den fingerförmigen Mitnehmern der Fördereinrichtung entlang den Hauptgleitschienen durch eine Kalibrierstation befördert, in der die oberen Kekse von einer Kalibriereinrichtung etwas nach unten gedrückt werden. Dabei werden die oberen Kekse gegen die an der Oberseite der unteren Kekse angeordnete, noch weiche Füllmasse angedrückt und die Sandwichkekse werden auf eine vorgegebene Dicke zusammengedrückt.

Die US 2 868 141 beschreibt eine Vorrichtung zur Herstellung von Sandwichkeks auf einer Fördervorrichtung, wobei ein vergleichsweise kleiner Abschnitt der Fördervorrichtung eine Unterdruckkammer aufweist. Nachteilig an dieser Konstruktion ist, dass die Keks nur in einem sehr kleinen Bereich durch Unterdruckkräfte an dem Förderband gehalten werden. Eine Erhöhung der Fördergeschwindigkeit der Keksbestandteile und eine Erhöhung des Durchsatzes bei gleichzeitiger Verbesserung der Qualität der Produkte kann durch diese Konstruktion nicht bewirkt werden.

Aufgabe der Erfindung ist es, Anlagen der eingangs genannten Art zu verbessern.

Als Lösung schlägt die Erfindung eine Anlage vor, die die Merkmalskombination des unabhängigen Patentanspruchs umfasst.

Diese Ausbildung sieht eine deutliche Vereinfachung der die Sandwichkekse erzeugenden Anlage vor. Bei der für den Transport der Kekse vorgesehenen Fördereinrichtung entfallen die Gleitschienen und die endlose Kette mit den an ihr befestigten, fingerförmigen Mitnehmern zum Verschieben der Kekse entlang der Fördereinrichtung. Eine eigene Deckelungsstation zum Zusammensetzen der mit Füllmasse versehenen unteren Kekse mit den oberen Keksen entfällt, weil der zweite Keksabgabekopf die oberen Kekse direkt auf den mit Füllmasse versehenen unteren Keksen absetzt. Die nach dem ersten Keksabgabekopf angeordnete erste Inspektionseinrichtung sieht ein Inspizieren der auf dem Saugband abgesetzten, unteren Kekse vor. Das Inspizieren kann sich sowohl auf die Position der unteren Kekse auf dem Saugband als auch auf die Kekse selbst beziehen. Die nach dem zweiten Keksabgabekopf angeordnete, zweite Inspektionseinrichtung sieht ein Inspizieren der vom zweiten Keksabgabekopf gebildeten, auf dem Saugband angeordneten Kekssandwiches vor. Das Inspizieren kann sich bei jedem Kekssandwich sowohl auf die Position des oberen Kekses gegenüber dem unteren Keks, als auch auf richtige Anordnung der Füllmasse und auch auf den oberen Keks selbst beziehen. Wenn eine der beiden Inspektionseinrichtungen einen Fehler beim unteren Keks, beim Füllmasseauftrag oder beim oberen Keks feststellt, kann das entsprechende Sandwichkeks beim Austritt aus der Anlage bzw. der Übergabe an eine Verpackungsanlage ausgeschieden werden.

Erfindungsgemäß kann die erste Inspektionseinrichtung mit einem Bildverarbeitungssensor versehen sein und die vom ersten Keksabgabekopf auf dem Saugband abgesetzten, unteren Kekse überprüfen. Diese Ausbildung erlaubt es, beim Inspizieren der auf dem Saugband abgesetzten, unteren Kekse nicht nur deren Position auf dem Saugband, sondern auch die unteren Kekse selbst zu überprüfen, z. B. auf Größe, Gestalt - rund, rechteckig -, Fehlstellen, Risse etc.

Gemäß einem weiteren Merkmal der Erfindung kann die Streicheinrichtung mit einer in Abhängigkeit von dem Inspektionsergebnis der ersten Inspektionseinrichtung verstellbaren Dosiereinrichtung für die Füllmasse versehen sein. Diese Ausbildung ist bei einem Produktwechsel von Vorteil, wenn von einer Keksgröße auf eine andere Keksgröße oder von einer

Gemäß einem weiteren Merkmal der Erfindung kann die Streicheinrichtung einen individuell ansteuerbaren Antriebsmotor für den Streichkopf besitzen, welcher in Abhängigkeit von dem Inspektionsergebnis der ersten Inspektionseinrichtung zum kurzzeitigen Unterbrechen des Füllmasseauftrages vorübergehend stillsetzbar ist. Diese Ausbildung erlaubt es, den Streichkopf der Streicheinrichtung vorübergehend still zu setzen, bevor das von der ersten Inspektionseinrichtung als fehlerhaft erkannte, untere Keks auf dem Saugband liegend den Streichkopf passiert. Auf diese Weise wird bei einem fehlerhaften, unteren Keks keine Füllmasse auf dessen Oberseite aufgebracht und die entsprechende Füllmassemenge eingespart. Diese Ausbildung erlaubt es weiters, den Streichkopf der Streicheinrichtung auch dann vorübergehend still zu setzen, wenn vom ersten Keksabgabekopf einmal kein unteres Keks auf dem Saugband abgesetzt wurde. Auch in diesem Falle wird bei der Streicheinrichtung eine für ein einzelnes Keks vorgesehene Füllmassemenge eingespart. Zusätzlich wird ein Verschmutzen des Saugbandes mit Füllmasse verhindert.

Gemäß einem weiteren Merkmal der Erfindung kann die zweite Inspektionseinrichtung mit einem Bildverarbeitungssensor versehen sein, der die auf dem Saugband vom zweiten Keksabgabekopf gebildeten Kekssandwiches inspiziert. Diese Ausbildung erlaubt es, beim Inspizieren der auf dem Saugband angeordneten Kekssandwiches die korrekte Position der oberen Kekse über den unteren Keksen zu überprüfen. Wenn diese Position bei einem Kekssandwich nicht stimmt, kann der entsprechende Kekssandwich z. B. beim Austritt aus der Anlage bzw. bei der Übergabe an eine Verpackungsanlage ausgeschieden werden. Diese Ausbildung erlaubt es weiters, beim Inspizieren der auf dem Saugband angeordneten Kekssandwiches die zwischen den beiden Keksen angeordnete Füllmasse zu überprüfen, ob diese über den Rand der oberen Kekse vorsteht oder nicht. Diese Ausbildung erlaubt es weiters, zu überprüfen, ob sich unter den oberen Keksen, die vom zweiten Keksabgabekopf auf den, auf dem Saugband liegenden, an der Oberseite eine Füllmasse tragenden, unteren Keksen abgesetzt werden, auch fehlerhafte Kekse befinden, bei denen z. B. eine Ecke fehlt, oder ein kleiner Keksteil abgebrochen ist, oder die zwar vollständig aber gebrochen sind und eine Bruchlinie aufweisen. Wenn in der zweiten Inspektionseinrichtung ein mit einem fehlerhaften, oberen Keks versehener Kekssandwich ermittelt wird, so kann dieser z. B. beim Austritt aus der Anlage bzw. bei der Übergabe an eine Verpackungsanlage ausgeschieden werden.

Gemäß einem weiteren Merkmal der Erfindung kann vorgesehen sein, dass zum Herstellen von Sandwichkeksen mit einer zusätzlichen Kekslage über dem Saugbandförderer nach der zweiten Inspektionseinrichtung ein zylindrischer Streichkopf einer zweiten Streicheinrichtung, ein Keksabgabekopf einer dritten Kekszuführeinrichtung und eine die auf dem Saugband angeordneten Kekssandwiches inspizierende, dritte Inspektionseinrichtung hintereinander angeordnet sind. Diese Ausbildung der erfindungsgemäßen Anlage ermöglicht die Herstellung von gefüllten 3-lagigen Sandwichkeksen, bei deren Herstellung die vom zweiten Keksabgabekopf kommenden Kekssandwiches vom Streichkopf der zweiten Streicheinrichtung an der Oberseite mit einer Füllmasse versehen werden, auf der dann der Keksabgabekopf der dritten Kekszuführeinrichtung seine Kekse absetzt. Die so entstandenen Sandwichkekse werden dann in der dritte Inspektionseinrichtung überprüft.

Bei einer Anlage zum Herstellen von gefüllten, 3-lagigen Sandwichkeksen kann erfindungsgemäß vorgesehen sein, dass die zweite Streicheinrichtung mit einer in Abhängigkeit von dem Inspektionsergebnis einer Inspektionseinrichtung verstellbaren Dosiereinrichtung für die Füllmasse versehen ist. Diese Ausbildung ist bei einem Produktwechsel von Vorteil, wenn von einer Keksgröße auf eine andere Keksgröße oder von einer Keksform (eckig) auf eine andere Keksform (rund) gewechselt wird.

Bei einer Anlage zum Herstellen von gefüllten, 3-lagigen Sandwichkeksen kann die zweite Streicheinrichtung einen individuell ansteuerbaren Antriebsmotor für den Streichkopf besitzen, welcher in Abhängigkeit von dem Inspektionsergebnis der zweiten Inspektionseinrichtung zum kurzzeitigen Unterbrechen des Füllmasseauftrages vorübergehend stillsetzbar ist. Diese Ausbildung erlaubt es, den Streichkopf der zweiten Streicheinrichtung vorübergehend still zu setzen, bevor der von der zweiten Inspektionseinrichtung als fehlerhaft erkannte Kekssandwich auf dem Saugband liegend den Streichkopf der zweiten Streicheinrichtung passiert. Dadurch wird eine einem einzelnen Keks entsprechende Füllmassemenge eingespart, die sonst zusammen mit dem fehlerhaften Kekssandwich ausgeschieden würde.

Bei einer Anlage zum Herstellen von gefüllten, 3-lagigen Sandwichkeksen kann erfindungsgemäß vorgesehen sein, dass die dritte Inspektionseinrichtung mit einem Bildverarbeitungssensor versehen ist, der die auf dem Saugband vom dritten Keksabgabekopf gebildeten 3-lagigen Kekssandwiches inspiziert. Diese Ausbildung erlaubt es, beim Inspizieren der auf dem Saugband angeordneten 3-lagigen Kekssandwiches jeweils die korrekte Position des obersten Kekses gegenüber den beiden unteren Keksen zu überprüfen. Wenn diese Position bei einem Kekssandwich nicht stimmt, kann dieser z. B. beim Austritt aus der Anlage bzw. bei der Übergabe an eine Verpackungsanlage ausgeschieden werden. Diese Ausbildung erlaubt es weiters, an den 3-lagigen Kekssandwiches die vom Streichkopf der zweiten Streicheinrichtung aufgebrachte Füllmasse zu überprüfen, ob diese über den Rand der obersten Kekse vorsteht oder nicht. Diese Ausbildung erlaubt es weiters, zu überprüfen, ob sich unter den Keksen, die vom dritten Keksabgabekopf auf den, an der Oberseite eine Füllmasse tragenden Kekssandwiches abgesetzt werden, auch fehlerhafte Kekse befinden, bei denen z. B. eine Ecke fehlt, oder ein kleiner Keksteil abgebrochen ist, oder die zwar vollständig aber gebrochen sind und eine Bruchlinie aufweisen. Wenn in der dritten Inspektionseinrichtung ein mit einem fehlerhaften, oberen Keks versehener Kekssandwich ermittelt wird, so kann dieser z. B. beim Austritt aus der Anlage bzw. bei der Übergabe an eine Verpackungsanlage ausgeschieden werden.

Gemäß einem weiteren Merkmal der Erfindung kann vorgesehen sein, dass jeder Keksabgabekopf eine am unteren Ende eines Keksmagazins angeordnete, die aus dem Keksmagazin nach unten austretenden Kekse vereinzelnde und einzeln an das Saugband weitergebende, kontinuierlich bewegbare Übergabevorrichtung besitzt. Die Übergabevorrichtung kann erfindungsgemäß mit einem um eine horizontale Achse rotierenden Rotor versehen sein, der am äußeren Umfang zumindest eine Keks-Aufnahme besitzt. Erfindungsgemäß kann der Rotor der Übergabevorrichtung als Rad ausgebildet sein, das über seinen Umfang verteilt angeordnete Keks-Aufnahmen besitzt.

Gemäß einem weiteren Merkmal der Erfindung kann eine dem Saugband des Saugbandförderers zugeordnete, vor der Kalibriereinrichtung angeordnete Auswurfeinrichtung für die Kekse vorgesehen sein. Diese Auswurfeinrichtung kann mit einer individuell ansteuerbaren Betätigungseinrichtung versehen sein.

Gemäß einem weiteren Merkmal der Erfindung kann bei der Anlage zum Herstellen von Sandwichkeksen und dergleichen vorgesehen sein, dass der Saugbandförderer einen individuell ansteuerbaren Antriebsmotor für das Saugband besitzt, dass jede Streicheinrichtung mit einem individuell ansteuerbaren Antriebsmotor für ihren Streichkopf versehen ist, dass jeder Keksabgabekopf mit einem individuell ansteuerbaren Antriebsmotor für seine kontinuierlich bewegbare Übergabevorrichtung versehen ist, und dass eine die einzelnen Antriebsmotore individuell ansteuernde und synchronisierende, elektronische Steuereinrichtung vorgesehen ist, die mit allen Inspektionseinrichtungen und der individuell ansteuerbaren Betätigungseinrichtung der Auswurfeinrichtung verbunden ist.

Eine solche Ausbildung der Anlage erlaubt unterschiedliche Betriebsvarianten. Zum einen können während des Betriebes der Anlage vereinzelt entstehende, fehlerhafte Kekssandwiches bei laufender Anlage über die elektronische Anlagensteuerung selbsttätig aus der Anlage ausgeschieden werden. Zum anderen kann die Einstellung der Anlage auf das jeweilige Produkt bei laufender Anlage über die elektronische Anlagensteuerung erfolgen. So kann z. B. die Lage des Füllmasseauftrages auf den unteren Keksen bzw. die Lage der oberen Kekse auf dem Füllmasseauftrag über die elektronische Anlagensteuerung verändert werden.

Wenn die erste Inspektionseinrichtung an die elektronische Anlagensteuerung meldet, dass vom ersten Keksabgabekopf ein fehlerhaftes Keks oder gar kein Keks auf dem Saugband abgelegt wurde, sieht eine erste Betriebsvariante vor, dass über die elektronische Anlagensteuerung der Streichkopf der Streicheinrichtung vorübergehend stillgesetzt wird, um das Auftragen von Füllmasse beim fehlerhaften, unteren Keks bzw. bei der leeren Keksposition des Saugbandes zu verhindern. Bei dieser Betriebsvariante läuft der erste Keksabgabekopf weiter und legt ein oberes Keks auf dem unteren Keks bzw. auf der leeren Keksposition des Saugbandes ab. Bei dieser Betriebsvariante wird zeitversetzt zum Stillsetzen des Streichkopfes die Auswurfeinrichtung aktiviert, um das fehlerhafte, untere Keks und das auf ihm liegende obere Keks bzw. das auf dem Saugband liegende obere Keks beim Passieren der Auswurfeinrichtung vom Saugband zu entfernen. Eine andere Betriebsvariante sieht vor, dass über die elektronische Anlagensteuerung zusätzlich zum Streichkopf der Streicheinrichtung auch der erste Keksabgabekopf vorübergehend stillgesetzt und die Auswurfeinrichtung aktiviert wird, sobald das fehlerhafte, untere Keks bei der Auswurfeinrichtung angekommen ist.

Eine Betriebsvariante für eine Anlage zum Herstellen von gefüllten, 3-lagigen Sandwichkeksen sieht vor, dass über die elektronische Anlagensteuerung die Streichköpfe der beiden Streicheinrichtungen und die Keksabgabeköpfe der zweiten und dritten Kekszuführeinrichtung vorübergehend stillgesetzt werden, wenn die erste Inspektionseinrichtung an die elektronische Anlagensteuerung meldet, dass vom ersten Keksabgabekopf ein fehlerhaftes Keks oder gar kein Keks auf dem Saugband abgelegt wurde. Bei dieser Betriebsvariante wird die Auswurfeinrichtung über die elektronische Anlagensteuerung aktiviert, um das die Auswurfeinrichtung passierende, fehlerhafte, untere Keks vom Saugband zu entfernen.

Wenn die zweite Inspektionseinrichtung an die elektronische Anlagensteuerung meldet, dass der vom zweiten Keksabgabekopf gebildete Kekssandwich fehlerhaft ist, wird dieser von der über die elektronische Anlagensteuerung aktivierten Auswurfeinrichtung vom Saugband entfernt. In einem solchen Fall wird bei einer Anlage zum Herstellen von gefüllten, 3-lagigen Sandwichkeksen auch der Streichkopf der zweiten Streicheinrichtung über die elektronische Anlagensteuerung vorübergehend stillgesetzt. Dadurch wird verhindert, dass der fehlerhaft Kekssandwich mit Füllmasse versehen wird, bevor er durch die über die elektronische Anlagensteuerung aktivierte Auswurfeinrichtung vom Saugband entfernt wird. Gemäß einer weiteren Betriebsvariante einer Anlage zu Herstellen von gefüllten 3-lagigen Sandwichkeksen wird in einem solchen Fall auch der Keksabgabekopf der dritten Kekszuführeinrichtung über die elektronische Anlagensteuerung vorübergehend stillgesetzt, um das Ablegen eines dritten Kekses auf dem fehlerhaften Kekssandwich zu verhindern.

Wenn bei einer Anlage zum Herstellen von gefüllten, 3-lagigen Sandwichkeksen die dritte Inspektionseinrichtung an die elektronische Anlagensteuerung meldet, dass der vom dritten Keksabgabekopf gebildete Kekssandwich fehlerhaft ist, wird dieser durch die über die elektronische Anlagensteuerung aktivierte Auswurfeinrichtung vom Saugband entfernt.

Bei der erfindungsgemäßen Anlage werden die in die Anlage eingebrachten Kekse nach ihrer Übergabe an den Saugbandförderer einer Inspektion unterzogen, wobei sowohl die unteren Kekse als auch die auf diesen gebildeten Kekssandwiches inspiziert werden. Dadurch können fehlerhafte untere Kekse und fehlerhafte Kekssandwiches identifiziert und von der Weitergabe an eine nachgeordnete Verpackungsanlage ausgeschlossen werden. Dieser Ausschluss von der Weitergabe kann bei der für alle in der Anlage entstandenen Sandwichkekse vorgesehenen Übergabe an die nachgeordnete Verpackungsanlage erfolgen. Bei einer mit einer Auswurfeinrichtung versehenen erfindungsgemäßen Anlage kann dieser Ausschluss von der Weitergabe noch innerhalb der erfindungsgemäßen Anlage erfolgen, sodass aus dieser Anlage nur mehr vollständige und einwandfrei ausgebildete Sandwichkekse ausgegeben werden.

Die Identifizierung der fehlerhafte unteren Kekse und der fehlerhaften Kekssandwiches kann bei einer mit einer elektronische Steuereinrichtung versehenen Anlage noch innerhalb der Anlage dazu verwendet werden, die der jeweiligen Inspektionseinrichtung nachgeordneten Einrichtungen, wie Streichkopf und Keksabgabekopf, für die Dauer der Passage des fehlerhaften, unteren Kekses bzw. für die Dauer der Passage des fehlerhaften Kekssandwiches vorübergehend still zu setzen. Dadurch wird der zusammen mit dem jeweiligen, fehlerhaften unteren Keks bzw. mit dem jeweiligen fehlerhaften Kekssandwich auszuscheidende Produktionsausschuss auf das fehlerhafte untere Keks bzw. auf den fehlerhaften Kekssandwich beschränkt.

### Kurze Beschreibung der Zeichnungen

Nachstehend wird die Erfindung anhand der Zeichnungen näher erläutert. In den Zeichnungen zeigen:
- Fig. 1: eine erste Anlage zum Herstellen von Sandwichkeksen im Aufriss,
- Fig. 2: die Anlage der Fig. 1 in Draufsicht,
- Fig. 3: einen Keksabgabekopf im Aufriss,
- Fig. 4: einen Schnitt durch die Anlage der Fig. 1 im Bereich der ersten Inspektionseinrichtung im Aufriss,
- Fig. 5: einen Streichkopf im Aufriss,
- Fig. 6: den Streichkopf der Fig. 5 in Draufsicht

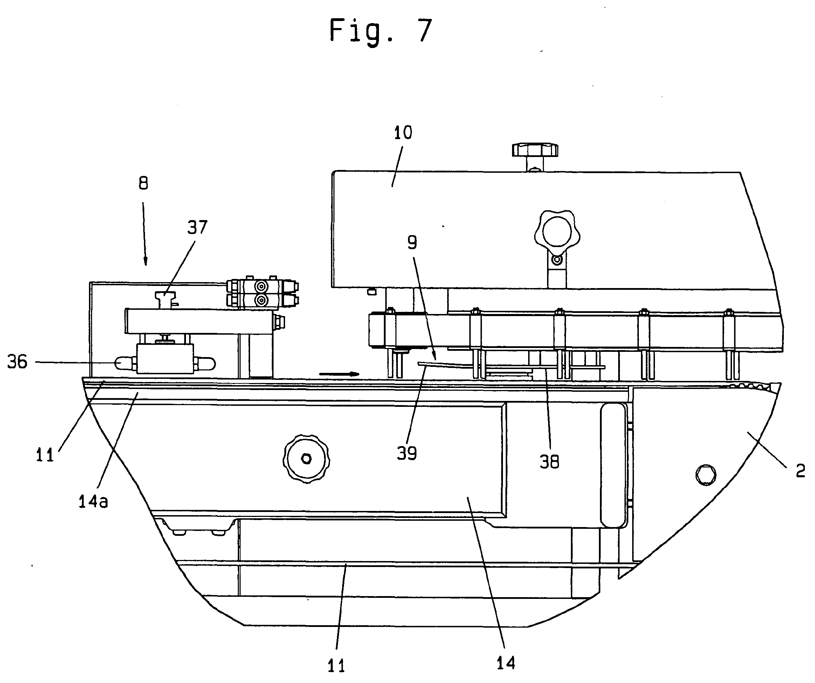

- Fig. 7: den Ausgabebereich der Anlage von Fig. 1 im Aufriss

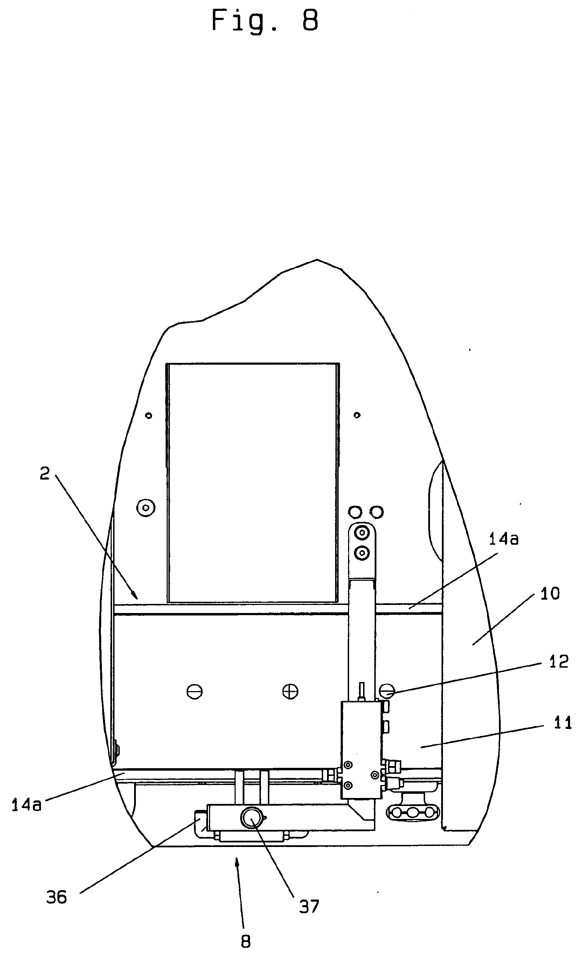

- Fig. 8: eine Draufsicht auf einen Teil der Fig. 7,
- Fig. 9: schematisch eine weitere Anlage zum Herstellen von Sandwichkeksen im Aufriss, und
- Fig. 10: die Anlage der Fig. 9 in Draufsicht

### Beschreibung von Ausführungsbeispielen

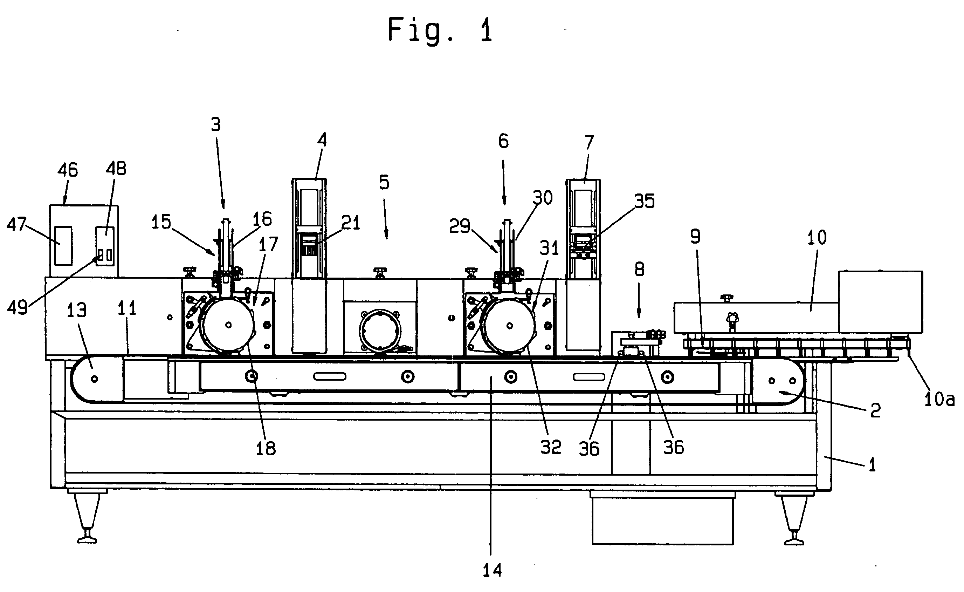

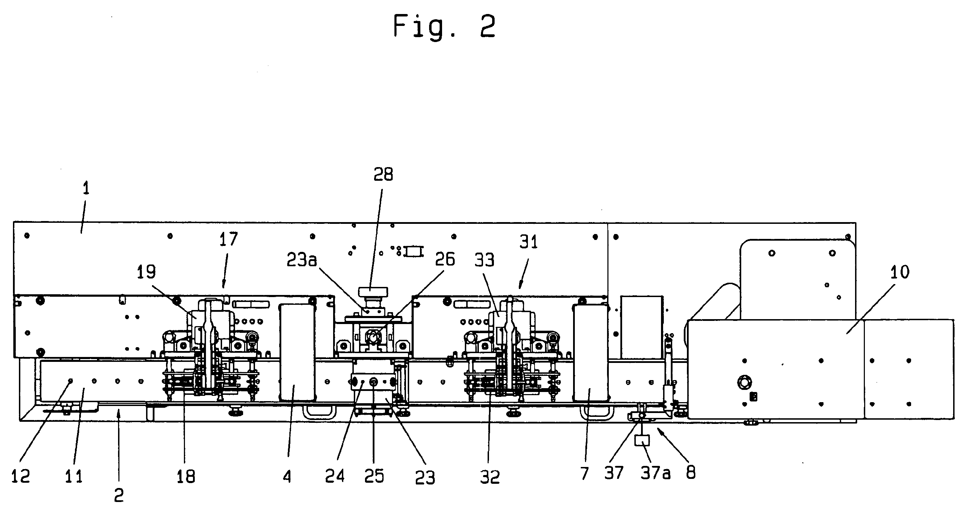

Die Figuren 1 und 2 zeigen eine Anlage zum Herstellen von 2-lagigen Sandwichkeksen, bei denen zwischen oberem und unterem Keks eine Füllmasse angeordnet ist.

Im Maschinengestell 1 der Anlage ist ein langgestreckter Saugbandförderer 2 angeordnet. Entlang diesem sind eine erste Kekszuführeinrichtung 3, eine erste Inspektionseinrichtung 4, eine Streicheinrichtung 5, eine zweite Kekszuführeinrichtung 6, eine zweite Inspektionseinrichtung 7, eine Auswurfeinrichtung 8 und eine Kalibriereinrichtung 9 in Längsrichtung hintereinander angeordnet. Die Kalibriereinrichtung 9 ist innerhalb der am Ende der Anlage angeordneten Ausgabeeinrichtung 10 angeordnet.

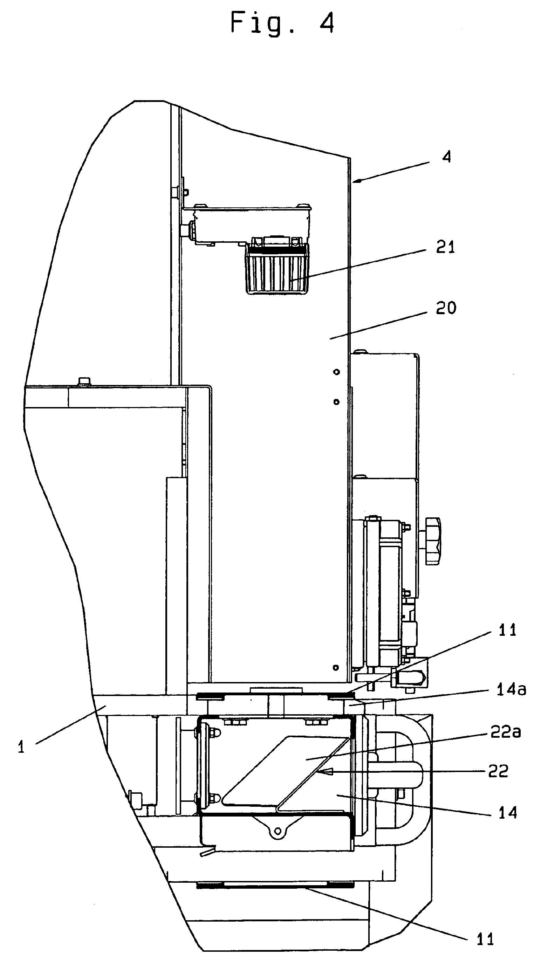

Der Saugbandförderer 2 weist ein in horizontaler Richtung umlaufendes, endloses Förderband auf, das mit einer Längsreihe von Löchern 12 versehen und als Saugband 11 ausgebildet ist. Das Saugband 11 wird über einen Antriebsmotor 13 angetrieben. Der Saugbandförderer 2 weist eine Unterdruckkammer 14 auf, die unter dem oberen Trumm des Saugbandes 11 angeordnet ist. Die Unterdruckkammer 14 erstreckt sich in Längsrichtung der Anlage von der ersten Kekszuführeinrichtung 3 bis zu der in der Ausgabeeinrichtung 10 angeordneten Kalibriereinrichtung 9. Die Unterdruckkammer 14 ist mit einem nicht dargestellten Saugzuggebläse verbunden, das den Unterdruck in der Unterdruckkammer 14 erzeugt. Die Unterdruckkammer 14 ist in einem in Längsrichtung des Saugbandförderers 2 verlaufenden Kanal angeordnet, der an der Oberseite durch eine ebene Platte 14a abgedeckt ist, auf der das obere Trumm des Saugbandes 11 mit seiner Unterseite aufliegt. Die Platte 14a enthält einen unter den Löchern 12 des Saugbandes 11 angeordneten Längsschlitz. An beiden seitlichen Längsrändern der Platte 14a ist jeweils eine Längsnut angeordnet, in die das als Zahnriemen ausgebildete Saugband 11 mit den entlang seinen Längsrändern angeordneten Zähnen eingreift (Fig. 4).

Die erste Kekszuführeinrichtung 3 besitzt einen über dem Saugbandförderer 2 angeordneten Ausgabeabschnitt 15. Der Ausgabeabschnitt 15 enthält ein oberes Keksmagazin 16 und einen zwischen diesem und dem Saugbandförderer 2 angeordneten, ersten Keksabgabekopf 17. Der Keksabgabekopf 17 trägt an seiner Vorderseite eine kontinuierlich umlaufende Keks-Übergabevorrichtung 18, die über einen an seiner Rückseite angeordneten Antriebsmotor 19 angetrieben wird

Die erste Inspektionseinrichtung 4 besitzt einen über dem Saugbandförderer 2 angeordneten, nach unten offenen Schacht 20, in dem ein Bildverarbeitungssensor 21 über dem Saugband 11 angeordnet ist. Die erste Inspektionseinrichtung 4 sieht eine in der Unterdruckkammer 14 angeordnete, das obere Trumm des Saugbandes 11 von unten beleuchtende Einrichtung 22 vor. Die an der Oberseite der Unterdruckkammer 14 angeordnete, ebene Platte 14a ist im Bereich der ersten Inspektionseinrichtung 4 mit einer Ausnehmung versehen, durch die das von einer Lichtquelle über den Spiegel 22a auf die Unterseite des Saugbandes 11 projizierte Licht auf das lichtdurchlässige Saugband 11 fällt. Dadurch werden die Umrisse des auf dem Saugband 11 liegenden Kekses und seine allfälligen Risse für den oberhalb des Saugbandes 11 angeordneten Bildverarbeitungssensor 21 gut erkennbar. (Fig. 4).

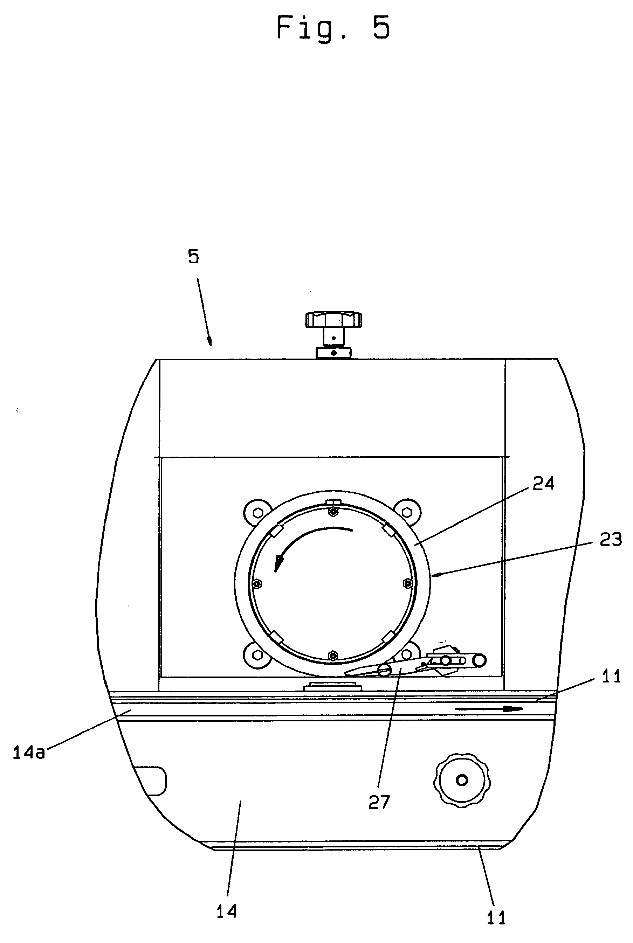

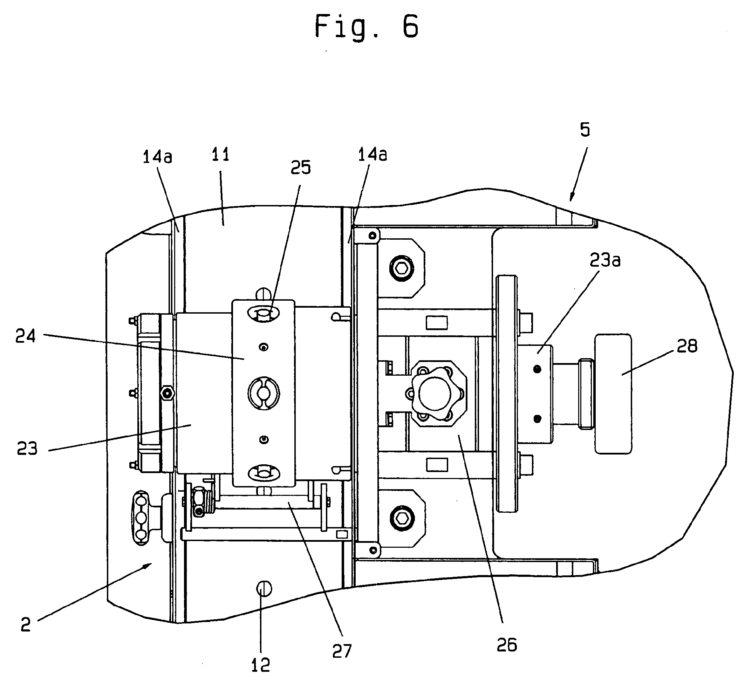

Die Fig. 5 und 6 zeigen die Streicheinrichtung 5. Diese besitzt einen über dem Saugbandförderer 2 angeordneten, zylindrischen Streichkopf 23, an dessen Außenseite ein zylindrischer Streichring 24 umläuft, der über seinen Umfang verteilt angeordnete Austrittsöffnungen 25 für die Füllmasse besitzt. Der Streichkopf 23 besitzt einen Antriebsmotor 26, über den der Streichring 24 in Rotation versetzt wird. Am unteren Scheitel des Streichkopfes 23 ist über dem Saugband 11 eine Abstreifeinrichtung 27 für die Füllmasse angeordnet. Diese trägt einen am Streichring 24 anliegenden Draht, der die aus einer Austrittsöffnung 25 des Streichringes 24 austretende Füllmasse vom rotierenden Streichring 24 abtrennt. An der Rückseite des Streichkopfes 23 ist ein Anschlussstutzen 28 vorgesehen, an dem eine nicht dargestellte Transportleitung für die Füllmasse angeschlossen wird. Die Streicheinrichtung 5 bzw. der Streichkopf 23 kann mit einer individuell ansteuerbaren Dosiereinrichtung 23a für die Füllmasse versehen sein.

Die zweite Kekszuführeinrichtung 6 besitzt einen über dem Saugbandförderer 2 angeordneten Ausgabeabschnitt 29. Der Ausgabeabschnitt 29 enthält ein oberes Keksmagazin 30 und einen zwischen dem Keksmagazin 30 und dem Saugbandförderer 2 angeordneten, zweiten Keksabgabekopf 31. Der Keksabgabekopf 31 trägt an seiner Vorderseite eine kontinuierlich umlaufende Keks-Übergabevorrichtung 32, die über einen an seiner Rückseite angeordneten Antriebsmotor 33 angetrieben wird.

Die zweite Inspektionseinrichtung 7 besitzt einen über dem Saugbandförderer 2 angeordneten, nach unten offenen Schacht 34, in dem ein Bildverarbeitungssensor 35 über dem Saugband 11 angeordnet ist.

Die Auswurfeinrichtung 8 sieht zwei neben dem Saugbandförderer 2 angeordnete, quer zur Laufrichtung des Saugbandes 11 ausgerichtete Blasdüsen 36 vor. Die Blasdüsen 36 sind mit einer Druckluftleitung verbunden, in der ein Sperrventil 37 sitzt, das über eine eigene Betätigungseinrichtung 37a betätigbar ist.

Die Ausgabeeinrichtung 10 sieht eine über dem Saugband 11 angeordnete, endlose Transportkette vor, die paarweise nebeneinander angeordnete, fingerförmige Mitnehmer 10a trägt, die von der Transportkette nach unten vorstehen und die auf dem Saugband 11 liegenden Sandwichkekse am hinteren Ende erfassen. Die in der Ausgabeeinrichtung 10 angeordnete Kalibriereinrichtung 9 sieht eine in einem vorgegebenen Abstand über dem Saugbandförderer 2 angeordnete, sich in Längsrichtung der Anlage erstreckende Kalibrierschiene 38 vor, die mit einer Einlaufschräge 39 versehen ist. Diese Kalibrierschiene 38 ist in dem zwischen den beiden nebeneinander angeordneten, fingerförmigen Mitnehmern 10a der Ausgabeeinrichtung 10 freibleibenden Zwischenraum angeordnet. Jedes Mitnehmerpaar befördert mit seinen zu beiden Seiten der Kalibrierschiene 38 angeordneten Mitnehmern 10a einen auf dem Saugband 11 liegenden fertigen Kekssandwich unter der Kalibrierschiene 38 hindurch. Der fertige Kekssandwich wird beim Passieren der Einlaufschräge 39 auf eine vorgegebene Dicke zusammendrückt und nach dem Verlassen der Kalibrierschiene 38 an eine nachfolgende Einrichtung z.B. an eine Verpackungsmaschine übergeben.

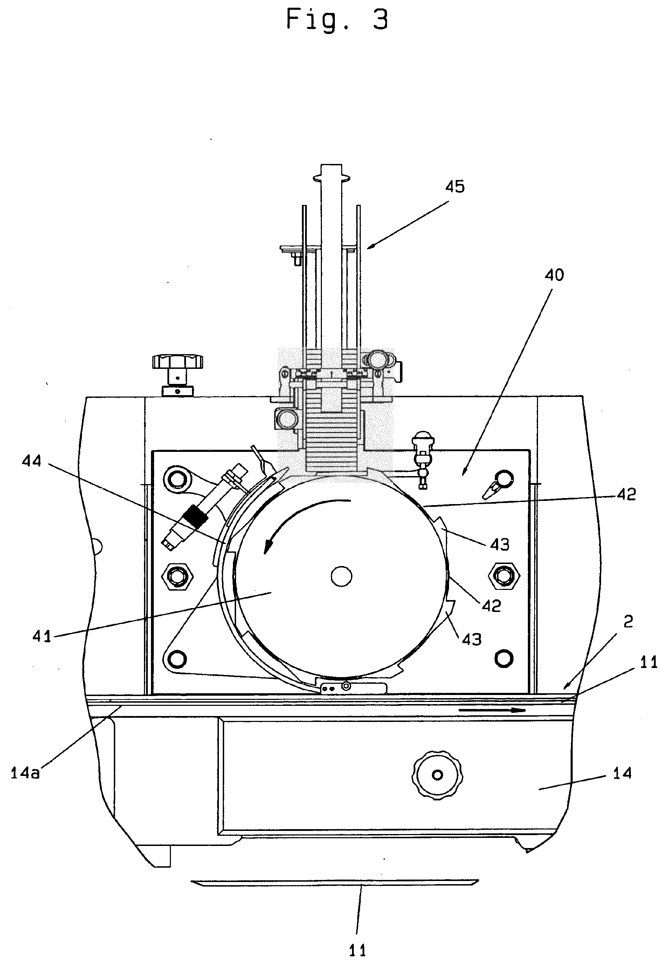

Die beiden Keksabgabeköpfe 17 und 31 sind gleich ausgebildet. Beide Keksabgabeköpfe 17 und 31 tragen an der Vorderseite eine von ihrem Antriebsmotor 19 bzw. 33 angetriebene Übergabevorrichtung 18 bzw. 32 für die Kekse. In Fig. 3 ist eine solche Übergabevorrichtung 40 im Detail dargestellt.

Die Übergabevorrichtung 40 besitzt einen Rotor 41, der eine horizontale Drehachse besitzt und entgegen dem Uhrzeigersinn umläuft. Der Rotor 41 ist als Rad ausgebildet, das mit mehreren, über seinen Umfang verteilt angeordneten Aufnahmen 42 für die Kekse versehen ist. Die Aufnahmen 42 sind jeweils als eine ebene Fläche ausgebildet, die an ihrem hinteren Ende durch einen radial nach außen vorstehenden Vorsprung 43 begrenzt ist. Entlang der hinteren Hälfte des Rotors 41 sind zwei kreisbogenförmig gekrümmte Leitschienen 44 nebeneinander angeordnet. Die beiden Leitschienen 44 verhindern, dass die entlang der hinteren Hälfte des Rotors 41 angeordneten Kekse während des Übergabevorganges aus der Übergabevorrichtung 40 herausfallen. Zwischen den beiden Leitschienen 44 ist ein an seinem oberen Ende schwenkbar gelagerter und mit einem Ausschalter verbundener Hebel angeordnet, der sich entlang der Außenseite des Rotors 41 erstreckt und von den dort angeordneten Keksen im Abstand von der Rotoroberfläche gehalten wird. Wenn die Kekse fehlen wird der Hebel bis zur Rotoroberfläche verschwenkt und der Ausschalter betätigt, der die Anlage abschaltet. Über dem Rotor 41 ist ein Keksmagazin 45 angeordnet, in dem ein vertikaler Keksstapel auf einer gabelartigen Bodenplatte aufliegt. Der Rotor 41 dreht sich entgegen dem Uhrzeigersinn. Er greift mit jedem Vorsprung 43 in den gabelartigen Spalt der Bodenplatte ein und befördert das unterste Keks des Keksstapels nach hinten aus dem Keksmagazin 45. Das Keks wird durch die Drehbewegung des Rotors 41 entlang den gekrümmten Leitschienen 44 nach unten zum Saugband 11 des Saugbandförderers 2 befördert. Beide Führungsschienen 44 tragen am unteren Ende ein mit seinem freien Ende in die Transportbahn der Kekse hineinragendes Federblech. Die beiden Federbleche verhindern, dass das Keks am unteren Scheitel des Rotors 41 frühzeitig von der ebenen Fläche der Aufnahme 42 herunterrutscht und nicht durch den am hinteren Ende der Aufnahme 42 angeordneten Vorsprung 43 an das Saugband 11 übergeben wird.

Die Anlage besitzt eine in einem Schaltschrank 46 angeordnete, elektronische Steuereinrichtung 47, die mit einer an der Vorderseite des Schaltschranks 46 angeordnete Eingabeeinrichtung 48 verbunden ist. Die Eingabeeinrichtung 48 besitzt mehrere Eingabetasten 49 zum Ein- und Abschalten der Anlage und zum Verstellen einzelner Arbeitsparameter der Anlage. Innerhalb der Anlage ist die elektronische Steuereinrichtung 47 mit dem Antriebsmotor 13 des Saugbandförderers 2, mit dem Antriebsmotor 19 des ersten Keksabgabekopfes 17, mit dem Bildverarbeitungssensor 21 der ersten Inspektionseinrichtung 4, mit dem Antriebsmotor 26 des Streichkopfes 23 der Streicheinrichtung 5, mit dem Antriebsmotor 33 des zweiten Keksabgabekopfes 31, mit dem Bildverarbeitungssensor 35 der zweiten Inspektionseinrichtung 7 und mit der Betätigungseinrichtung 37a des Sperrventils 37 der Auswurfeinrichtung 8 verbunden. Bei einem mit einer individuell ansteuerbaren Dosiereinrichtung 23a versehenen Streichkopf 23 ist auch die Dosiereinrichtung 23a mit der elektronischen Steuereinrichtung 47 verbunden.

Über die Steuereinrichtungen 47 ist es möglich, bei laufender Anlage die Position der unteren Kekse auf dem Saugband 11, die Menge und die Lage der Füllmasse auf den unteren Keksen, die Positionierung der oberen Kekse auf der Füllmasse und die Betätigungseinrichtung 37a der Auswurfeinrichtung 8 so zu beeinflussen, dass nur einwandfreie Sandwichkekse von der erfindungsgemäßen Anlage an eine nachfolgende Einrichtung, z. B. an eine Verpackungsmaschine übergeben werden.

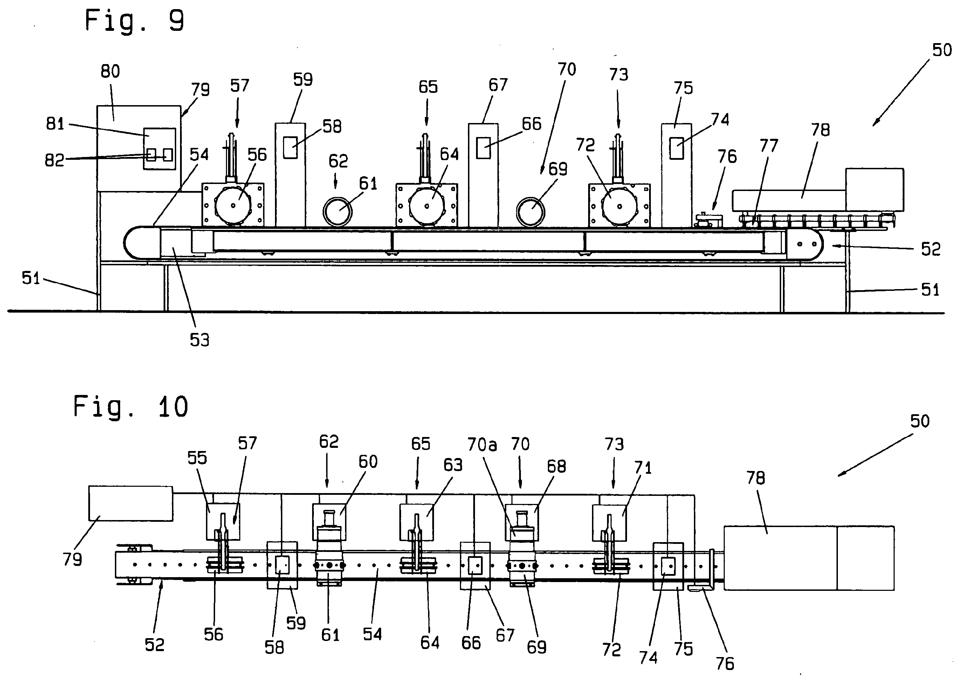

Fig. 9 und 10 zeigen eine Anlage 50 zum Herstellen von 3-lagigen Sandwichkeksen. Bei dieser Anlage 50 ist in einem Maschinengestell 51 ein langgestreckter Saugbandförderer 52 angeordnet, der mit einem eigenen Antriebsmotor 53 für sein umlaufendes Saugband 54 versehen ist. Die Ausbildung des Saugbandförderers 52 mit einer Unterdruckkammer, die in einem in Längsrichtung verlaufenden Kanal angeordnet und an der Kanaloberseite durch eine ebene Platte abgedeckt ist, entspricht der Ausbildung des Saugbandförderers 2 der Anlage der Fig. 1 und 2.

Über dem Saugbandförderer 52 sind folgende Einrichtung in Längsrichtung hintereinander angeordnet. Ein mit einem eigenen Antriebsmotor 55 versehener Keksabgabekopf 56 einer ersten Kekszuführeinrichtung 57. Eine mit einem Bildverarbeitungssensor 58 versehene, erste Inspektionseinrichtung 59. Ein mit einem eigenen Antriebsmotor 60 versehener Streichkopf 61 einer Streicheinrichtung 62. Ein mit einem eigenen Antriebsmotor 63 versehener Keksabgabekopf 64 einer zweiten Kekszuführeinrichtung 65. Eine mit einem Bildverarbeitungssensor 66 versehene, zweite Inspektionseinrichtung 67. Diese Einrichtungen entsprechen in ihrer Anordnung und in ihrer Ausführung den mit der gleichen Bezeichnung versehenen Einrichtungen der Anlage der Fig. 1 und 2.

Bei der Anlage 50 ist nach der zweiten Inspektionseinrichtung 67 ein mit einem eigenen Antriebsmotor 68 versehener Streichkopf 69 einer zweiten Streicheinrichtung 70 angeordnet, die der Streicheinrichtung 5 der Anlage von Fig. 1 und 2 entspricht und ebenso wie diese mit einer individuell ansteuerbaren Dosiereinrichtung 70a für die Füllmasse versehen sein kann. Nach dem Streichkopf 69 der zweiten Streicheinrichtung 70 ist ein mit einem eigenen Antriebsmotor 71 versehener Keksabgabekopf 72 einer dritten Kekszuführeinrichtung 73 angeordnet, die den beiden Kekszuführeinrichtungen der Anlage der Fig. 1 und 2 entspricht. Nach dem Keksabgabekopf 72 der dritten Kekszuführeinrichtung 73 ist eine mit einem Bildverarbeitungssensor 74 versehene, dritte Inspektionseinrichtung 75 über dem Saugbandförderer 52 angeordnet.

Auf die dritte Inspektionseinrichtung 75 folgt, so wie bei der Anlage der Fig. 1 und 2, eine Auswurfeinrichtung 76, eine Kalibriereinrichtung 77 und eine Ausgabeeinrichtung 78. Diese Einrichtungen entsprechen in ihrer Anordnung und in ihrer Ausführung den mit der gleichen Bezeichnung versehenen Einrichtungen der Anlage der Fig. 1 und 2.

Die Anlage 50 weist eine in einem Schaltschrank 79 angeordnete, elektronische Steuereinrichtung 80 auf, die mit einer an der Vorderseite des Schaltschranks 79 angeordnete Eingabeeinrichtung 81 verbunden ist. Die Eingabeeinrichtung 81 besitzt mehrere Eingabetasten 82 zum Ein- und Abschalten der Anlage 50 und zum Verstellen einzelner Arbeitsparameter der Anlage 50.

Innerhalb der Anlage 50 ist die elektronische Steuereinrichtung 80 mit dem Antriebsmotor 53 des Saugbandförderers 52, mit dem Antriebsmotor 55 des Keksabgabekopfes 56 der ersten Kekszuführeinrichtung 57, mit dem Bildverarbeitungssensor 58 der ersten Inspektionseinrichtung 59, mit dem Antriebsmotor 60 des Streichkopfes 61 der Streicheinrichtung 62, mit dem Antriebsmotor 63 des Keksabgabekopfes 64 der zweiten Kekszuführeinrichtung 65, mit dem Bildverarbeitungssensor 66 der zweiten Inspektionseinrichtung 67, mit dem Antriebsmotor 68 des Streichkopfes 69 der zweiten Streicheinrichtung 70, mit dem Antriebsmotor 71 des Keksabgabekopfes 72 der dritten Kekszuführeinrichtung 73, mit dem Bildverarbeitungssensor 74 der dritten Inspektionseinrichtung 75 und mit der Betätigungseinrichtung der Auswurfeinrichtung 76 verbunden. Bei einer mit einer individuell ansteuerbaren Dosiereinrichtung 70a versehenen zweiten Streicheinrichtung 70 ist auch die Dosiereinrichtung 70a mit der elektronischen Steuereinrichtung 80 verbunden.

Über die Steuereinrichtung 80 ist es möglich, bei laufender Anlage 50 die Position der unteren Kekse auf dem Saugband 54, die Menge und die Lage der ersten Füllmasse auf den unteren Keksen, die Positionierung der zweiten Kekse auf der ersten Füllmasse, die Menge und die Lage der zweiten Füllmasse auf den zweiten Keksen, die Positionierung der dritten Kekse auf der zweiten Füllmasse und die Betätigungseinrichtung der Auswurfeinrichtung 76 so zu beeinflussen, dass nur einwandfreie 3-lagige Sandwichkekse von der Anlage 50 an eine nachfolgende Einrichtung, z. B. an eine Verpackungsmaschine übergeben werden.

## Patentansprüche

1. Anlage zum Herstellen von Sandwichkeksen und dergleichen, bei welcher in einem Maschinengestell (1) entlang einer Sandwichingstrecke eine mit einem Keksmagazin (16) versehene erste Kekszuführeinrichtung (3) für die unteren Kekse, eine mit einem zylindrischen Streichkopf (23) versehene Streicheinrichtung (5), eine mit einem Keksmagazin (30) versehene zweite Kekszuführeinrichtung (6) für die oberen Kekse und eine Kalibriereinrichtung (9) für die Sandwichkekse hintereinander angeordnet sind und im Maschinengestell (1) eine langgestreckte Keksfördereinrichtung vorgesehen ist, die sich entlang der Sandwichingstrecke von der ersten Kekszuführeinrichtung bis zur Kalibriereinrichtung (9) für die Sandwichkekse erstreckt, wobei die Keksfördereinrichtung als Saugbandförderer (2) ausgebildet ist, auf dessen Saugband (11) die Sandwichkekse entstehen, dass die erste Kekszuführeinrichtung (3) einen über dem Saugbandförderer (2) angeordneten Ausgabeabschnitt (15) besitzt, in dem ein die unteren Kekse einzeln abgebender, erster Keksabgabekopf (17) angeordnet ist, wobei nach dem ersten Keksabgabekopf (17) eine erste Inspektionseinrichtung (4) für die auf dem Saugband (11) abgesetzten, unteren Kekse über dem Saugbandförderer (2) angeordnet ist, wobei nach der ersten Inspektionseinrichtung (4) der zylindrische Streichkopf (23) der Streicheinrichtung (5) über dem Saugbandförderer (2) angeordnet ist, wobei die zweite Kekszuführeinrichtung (6) einen nach dem Streichkopf (23) über dem Saugbandförderer (2) angeordneten Ausgabeabschnitt (29) besitzt, in dem ein die oberen Kekse einzeln abgebender, zweiter Keksabgabekopf (31) angeordnet ist, wobei nach dem zweiten Keksabgabekopf (31) über dem Saugbandförderer (2) eine zweite Inspektionseinrichtung (7) für die vom zweiten Keksabgabekopf (31) gebildeten, auf dem Saugband (11) angeordneten Kekssandwiches angeordnet ist,
wobei der Saugbandförderer (2) eine Unterdruckkammer (14) aufweist, die unter dem oberen Trumm des Saugbandes (11) angeordnet ist,
und wobei sich die Unterdruckkammer (14) in Längsrichtung der Anlage von der ersten Kekszuführeinrichtung (3) bis zu der in einer Ausgabeeinrichtung (10) angeordneten Ka- H libriereinrichtung (9) erstreckt.

2. Anlage nach Anspruch 1, ***dadurch gekennzeichnet,* dass** die erste Inspektionseinrichtung (4) mit einem Bildverarbeitungssensor (21) versehen ist und die vom ersten Keksabgabekopf (17) auf dem Saugband (11) abgesetzten, unteren Kekse inspiziert.

3. Anlage nach Anspruch 1 oder 2, ***dadurch gekennzeichnet,* dass** die Streicheinrichtung (5) mit einer in Abhängigkeit von dem Inspektionsergebnis der ersten Inspektionseinrichtung (4) verstellbaren Dosiereinrichtung (23a) für die Füllmasse versehen ist.

4. Anlage nach einem der Ansprüche 1-3, ***dadurch gekennzeichnet,* dass** die Streicheinrichtung (5) einen individuell ansteuerbaren Antriebsmotor (26) für den Streichkopf (23) besitzt, welcher in Abhängigkeit von dem Inspektionsergebnis der ersten Inspektionseinrichtung (4) zum kurzzeitigen Unterbrechen des Füllmasseauftrages vorübergehend stillsetzbar ist.

5. Anlage nach Anspruch 1, ***dadurch gekennzeichnet,* dass** die zweite Inspektionseinrichtung (7) mit einem Bildverarbeitungssensor (35) versehen ist und die auf dem Saugband (11) vom zweiten Keksabgabekopf (31) gebildeten Kekssandwiches inspiziert.

6. Anlage nach einem der Ansprüche 1-5, ***dadurch gekennzeichnet,* dass** zum Herstellen von Sandwichkeksen mit einer zusätzlichen Kekslage über dem Saugbandförderer (52) nach der zweiten Inspektionseinrichtung (67) ein zylindrischer Streichkopf (69) einer zweiten Streicheinrichtung (70), ein Keksabgabekopf (72) einer dritten Kekszuführeinrichtung (73) und eine die auf dem Saugband (54) angeordneten Kekssandwiches inspizierende, dritte Inspektionseinrichtung (75) hintereinander angeordnet sind.

7. Anlage nach Anspruch 6, ***dadurch gekennzeichnet,* dass** die zweite Streicheinrichtung (70) mit einer in Abhängigkeit vom Inspektionsergebnis einer Inspektionseinrichtung (59, 67) verstellbaren Dosiereinrichtung (70a) für die Füllmasse versehen ist.

8. Anlage nach Anspruch 6 oder 7, ***dadurch gekennzeichnet,* dass** die zweite Streicheinrichtung (70) einen individuell ansteuerbarer Antriebsmotor (71) für ihren Streichkopf (69) besitzt, welcher in Abhängigkeit von dem Inspektionsergebnis der zweiten Inspektionseinrichtung (67) zum kurzzeitigen Unterbrechen des Füllmasseauftrages vorübergehend stillsetzbar ist.

9. Anlage nach einem der Ansprüche 6-8, ***dadurch gekennzeichnet,* dass** die dritte Inspektionseinrichtung (75) mit einem Bildverarbeitungssensor (74) versehen ist und die auf dem Saugband (54) vom dritten Keksabgabekopf (72) gebildeten Kekssandwiches inspiziert.

10. Anlage nach einem der Ansprüche 1-9, ***dadurch gekennzeichnet,* dass** jeder Keksabgabekopf (17, 31, 72) eine am unteren Ende eines Keksmagazins (16, 30, 45) angeordnete, die aus dem Keksmagazin (16, 30) nach unten austretenden Kekse vereinzelnde und einzeln an das Saugband (11, 54) weitergebende, kontinuierlich bewegbare Übergabevorrichtung (18, 32, 40) besitzt.

11. Anlage nach Anspruch 10, ***dadurch gekennzeichnet,* dass** die Übergabevorrichtung (40) mit einem um eine horizontale Achse rotierenden Rotor (41) versehen ist, der am äußeren Umfang zumindest eine Keks-Aufnahme (42) besitzt.

12. Anlage nach Anspruch 11, ***dadurch gekennzeichnet,* dass** der Rotor (41) der Übergabevorrichtung (40) als Rad ausgebildet ist, das über seinen Umfang verteilt angeordnete Keks-Aufnahmen (42) besitzt.

13. Anlage nach einem der Ansprüche 1-12, ***dadurch gekennzeichnet,* dass** eine dem Saugband (11, 54) des Saugbandförderers (2, 52) zugeordnete, vor der Kalibriereinrichtung (9, 77) angeordnete Auswurfeinrichtung (8, 76) für die Kekse vorgesehen ist.

14. Anlage nach Anspruch 13, ***dadurch gekennzeichnet,* dass** die Auswurfeinrichtung (8, 76) mit einer individuell ansteuerbaren Betätigungseinrichtung (37a) versehen ist.

15. Anlage nach einem der Ansprüche 1-14, ***dadurch gekennzeichnet,* dass** der Saugbandförderer (2, 52) einen individuell ansteuerbaren Antriebsmotor (13, 53) für das Saugband (11, 54) besitzt, dass jede Streicheinrichtung (5, 70) mit einem individuell ansteuerbaren Antriebsmotor (26, 68) für ihren Streichkopf (23, 69) versehen ist, dass jeder Keksabgabekopf (17, 31, 72) mit einem individuell ansteuerbaren Antriebsmotor (19, 33, 71) für seine kontinuierlich bewegbare Übergabevorrichtung (18, 32) versehen ist, und dass eine die einzelnen Antriebsmotore (19, 33, 71) individuell ansteuernde und synchronisierende, elektronische Steuereinrichtung (47, 80) vorgesehen ist, die mit allen Inspektionseinrichtungen (4, 7, 59, 67, 75) und der individuell ansteuerbaren Betätigungseinrichtung (37a) der Auswurfeinrichtung (8, 76) verbunden ist.

16. Anlage nach Anspruch 15, ***dadurch gekennzeichnet,* dass** jeder Streichkopf (23, 69) mit einer individuell ansteuerbaren Dosiereinrichtung (23a, 70a) für die Füllmasse versehen ist und dass die Dosiereinrichtung (23a, 70a) mit der elektronischen Steuereinrichtung (47, 80) verbunden ist.

## Claims

1. An installation for producing sandwich cookies and the like, in which a first cookie feeding device (3) provided with a cookie hopper (16) for the lower cookies, a coating device (5) provided with a cylindrical coating head (23), a second cookie feeding device (6) provided with a cookie hopper (30) for the upper cookies and a calibration device (9) for the sandwich cookies are disposed consecutively in a machine frame (1) along a sandwiching section and an elongate cookie conveying device is provided in said machine frame (1), which cookie conveying device extends along said sandwiching section from the first cookie feeding device as far as said calibration device (9) for the sandwich cookies, wherein said cookie conveying device is configured as a suction belt conveyor (2), on the suction belt (11) of which the sandwich cookies are created, the first cookie feeding device (3) has an output portion (15) disposed above the suction belt conveyor (2), in which a first cookie discharging head (17) discharging the lower cookies individually is disposed, wherein a first inspection device (4) for the lower cookies deposited on said suction belt (11) is disposed downstream of said first cookie discharging head (17) above the suction belt conveyor (2), wherein said cylindrical coating head (23) of said coating device (5) is disposed downstream of said first inspection device (4) above said suction belt conveyor (2), wherein said second cookie feeding device (6) has a second output portion (29) disposed downstream of said coating head (23) above said suction belt conveyor (2), in which a second cookie discharging head (31) discharging the upper cookies individually is disposed and wherein a second inspection device (7) for the cookie sandwiches formed by said second cookie discharging head (31) and disposed on said suction belt (11) is disposed downstream of said second cookie discharging head (31) above said suction belt conveyor (2),
wherein said suction belt conveyor (2) has a negative-pressure chamber (14) disposed below the upper strand of the suction belt (11),
and wherein the negative-pressure chamber (14) extends in the longitudinal direction of the installation from the first cooking feeding device (3) as far as the calibrating device (9) disposed in a discharge device (10).

2. The installation according to claim 1, **characterized in that** said first inspection device (4) is provided with an image processing sensor (21) and inspects the lower cookies deposited on said suction belt (11) by said first cookie discharging head (17).

3. The installation according to claim 1 or 2, **characterized in that** said coating device (5) is provided with a metering device (23a) for the filling mass which can be adjusted depending on the inspection result of said first inspection device (4).

4. The installation according to any one of claims 1 - 3, **characterized in that** said coating device (5) has an individually activatable drive motor (26) for said coating head (23), which, depending on the inspection result from said first inspection device (4), can be temporarily stopped in order to briefly interrupt the application of filling mass.

5. The installation according to claim 1, **characterized in that** said second inspection device (7) is provided with an image processing sensor (35) and inspects the cookie sandwiches formed on said suction belt (11) by said second cookie discharging head (31).

6. The installation according to any one of claims 1 - 5, **characterized in that** in order to produce sandwich cookies having an additional cookie layer, a cylindrical coating head (69) of a second coating device (70), a cookie discharging head (72) of a third cooking feeding device (73) and a third inspection device (75) inspecting the cookie sandwiches disposed on the suction belt (54) are disposed consecutively above the suction belt conveyor (52) downstream of the second inspection device (67).

7. The installation according to claim 6, **characterized in that** said second coating device (70) is provided with a metering device (70a) for the filling mass which can be adjusted depending on the inspection result of an inspection device (59, 67).

8. The installation according to claim 6 or 7, **characterized in that** said second coating device (70) has an individually activatable drive motor (71) for its coating head (69), which, depending on the inspection result of said second inspection device (67), can be temporarily stopped in order to briefly interrupt the application of filling mass.

9. The installation according to any one of claims 6 - 8, **characterized in that** said third inspection device (75) is provided with an image processing sensor (74) and inspects the cookie sandwiches formed on said suction belt (54) by said third cookie discharging head (72).

10. The installation according to any one of claims 1 - 9, **characterized in that** each cookie discharging head (17, 31, 72) has a continuously moveable transfer apparatus (18, 32, 40) disposed at the lower end of a cookie hopper (16, 30, 45) which separates the cookies emerging from the bottom of said cookie hopper (16, 30) and passes the cookies individually to said suction belt (11, 54).

11. The installation according to claim 10, **characterized in that** said transfer apparatus (40) is provided with a rotor (41) which rotates about a horizontal axis which has at least one cookie holder (42) on the outer circumference.

12. The installation according to claim 11, **characterized in that** said rotor (41) of said transfer apparatus (40) is configured as a wheel which has cookie holders (42) distributed over its circumference.

13. The installation according to any one of claims 1 - 12, **characterized in that** an ejecting device (8, 76), assigned to said suction belt (11, 54) of said suction belt conveyor (2, 52) disposed upstream of said calibration device (9, 77) is provided for the cookies.

14. The installation according to claim 13, **characterized in that** said ejecting device (8, 76) is provided with an individually activatable actuating device (37a).

15. The installation according to any one of claims 1 - 14, **characterized in that** said suction belt conveyor (2, 52) has an individually activatable drive motor (13, 53) for said suction belt (11, 54), each coating device (5, 70) has an individually activatable drive motor (26, 68) for its coating head (23, 69), each cookie discharging head (17, 31, 72) is provided with an individually activatable drive motor (19, 33, 71) for its continuously moveable transfer apparatus (18, 32) and that an electronic control device (47, 80) individually activating and synchronizing said individual drive motors (19, 33, 71) is provided, which is connected to all the inspection devices (4, 7, 59, 67, 75) and the individually activatable actuating device (37a) of the ejection device (8, 76).

16. The installation according to claim 15, **characterized in that** each coating head (23, 69) is provided with an individually activatable metering device (23a, 70a) for the filling mass and that said metering device (23a, 70a) is connected to said electronic control device (47, 80).

## Revendications

1. Installation pour la production de biscuits-sandwichs et similaires, sur laquelle, dans un bâti de machine (1), le long d'une ligne de sandwichage, un premier dispositif d'alimentation (3) de biscuits doté d'un magasin à biscuits (16) pour les biscuits inférieurs, un dispositif de couchage (5) doté d'une tête de couchage (23) cylindrique, un deuxième dispositif d'alimentation (6) de biscuits doté d'un magasin à biscuits (30) pour les biscuits supérieurs et un dispositif de calibrage (9) pour les biscuits-sandwichs sont placés les uns derrière les autres et dans le bâti de machine (1) il est prévu un dispositif allongé de transport des biscuits, qui s'étend le long de la ligne de sandwichage, du premier dispositif d'alimentation de biscuits jusqu'au dispositif de calibrage (9) pour les biscuits-sandwichs, le dispositif de transport des biscuits étant conçu en tant que convoyeur à bande aspirante (2) sur la bande aspirante (11) duquel sont constitués les biscuits-sandwichs, le premier dispositif d'alimentation (3) de biscuits ayant un premier tronçon de distribution (15) placé au-dessus du convoyeur à bande aspirante (2) dans lequel est placée une tête de distribution (17) des biscuits, distribuant un-à-un les biscuits inférieurs, après la première tête de distribution (17) des biscuits étant placé au-dessus du convoyeur à bande aspirante (2) un premier dispositif d'inspection (4) pour les biscuits inférieurs, déposés sur la bande aspirante (11), après le premier dispositif d'inspection (4), la tête de couchage (23) cylindrique du dispositif de couchage (5) étant placée au-dessus du convoyeur à bande aspirante (2), le deuxième dispositif d'alimentation (6) de biscuits ayant un tronçon de distribution (29) placé après la tête de couchage (23), au-dessus du convoyeur à bande aspirante (2) dans lequel est placée une deuxième tête de distribution (31) des biscuits, qui distribue un-à-un les biscuits supérieurs, après la deuxième tête de distribution (31) des biscuits, au-dessus du convoyeur à bande aspirante (2) étant placé un deuxième dispositif d'inspection (7) pour les biscuits-sandwichs formés par la deuxième tête de distribution (31) des biscuits, placés sur la bande aspirante (11),
le convoyeur à bande aspirante (2) comportant une chambre de dépression (14) qui est placée sur le brin supérieur de la bande aspirante (11),
et la chambre de dépression (14) s'étendant dans la direction longitudinale de l'installation, du premier dispositif d'alimentation (3) de biscuits jusqu'au dispositif de calibrage (9) placé dans un dispositif de distribution (10).

2. Installation selon la revendication 1, **caractérisée en ce que** le premier dispositif d'inspection (4) est doté d'un capteur de traitement des images (21) et inspecte les biscuits inférieurs, déposés sur la bande aspirante (11) par la première tête de distribution (17) de biscuits.

3. Installation selon la revendication 1 ou 2, **caractérisée en ce que** le dispositif de couchage (5) est doté d'un dispositif de dosage (23a) de la masse de remplissage qui est réglable en fonction du résultat de l'inspection du premier dispositif d'inspection (4).

4. Installation selon l'une quelconque des revendications 1 - 3, **caractérisée en ce que** le dispositif de couchage (5) comporte un moteur d'entraînement (26) individuellement actionnable pour la tête de couchage (23), qui en fonction du résultat d'inspection du premier dispositif d'inspection (4) peut être mis provisoirement à l'arrêt pour une brève interruption de l'application de la masse de remplissage.

5. Installation selon la revendication 1, **caractérisée en ce que** le deuxième dispositif d'inspection (7) est doté d'un capteur de traitement des images (35) et inspecte les biscuits-sandwichs, déposés sur la bande aspirante (11) par la deuxième tête de distribution (31) de biscuits.

6. Installation selon l'une quelconque des revendications 1 - 5, **caractérisée en ce que** pour la production de biscuits-sandwichs avec une couche de biscuit supplémentaire, au-dessus du convoyeur à bande aspirante (52), après le deuxième dispositif d'inspection (67) sont placés les uns derrière les autres une tête de couchage (69) cylindrique d'un deuxième dispositif de couchage (70), une tête de distribution (72) des biscuits, un troisième dispositif d'alimentation (73) de biscuits et un troisième dispositif d'inspection (75) qui inspecte les sandwichs de biscuits placés sur la bande aspirante (54).

7. Installation selon la revendication 6, **caractérisée en ce que** le deuxième dispositif de couchage (70) est doté d'un dispositif de dosage (70a) de la masse de remplissage qui est réglable en fonction du résultat d'inspection d'un dispositif d'inspection (59, 67).

8. Installation selon la revendication 6 ou 7, **caractérisée en ce que** le deuxième dispositif de couchage (70) comporte un moteur d'entraînement (71) individuellement actionnable pour sa tête de couchage (69), qui en fonction du résultat d'inspection du deuxième dispositif d'inspection (67) peut être mis provisoirement à l'arrêt pour une brève interruption de l'application de la masse de remplissage.

9. Installation selon l'une quelconque des revendications 6 - 8, **caractérisée en ce que** le troisième dispositif d'inspection (75) est doté d'un capteur de traitement des images (74) et inspecte les sandwichs de biscuits déposés sur la bande aspirante (54) par la troisième tête de distribution (72) de biscuits.

10. Installation selon l'une quelconque des revendications 1 - 9, **caractérisée en ce que** chaque tête de distribution (17, 31, 72) de biscuits comporte un dispositif de transfert (18, 32, 40) déplaçable en continu, placé sur l'extrémité inférieure du magasin de biscuits (16, 30, 45) qui désolidarise les biscuits sortant vers le bas du magasin de biscuits (16, 30) et les restitue un-à-un à la bande aspirante (11, 54).

11. Installation selon la revendication 10, **caractérisée en ce que** le dispositif de transfert (40) est doté d'un rotor (41) tournant autour d'un axe horizontal, qui sur la circonférence extérieure comporte au moins un logement (42) pour biscuits.

12. Installation selon la revendication 11, **caractérisée en ce que** le rotor (41) du dispositif de transfert (40) est conçu en tant que roue, qui comporte des logements (42) pour biscuits placés en étant répartis sur sa circonférence.

13. Installation selon l'une quelconque des revendications 1 - 12, **caractérisée en ce qu'**il est prévu un dispositif d'éjection (8, 76) associé à la bande aspirante (11, 54) du convoyeur à bande aspirante (2, 52), placé avant le dispositif de calibrage (9, 77).

14. Installation selon la revendication 13, **caractérisée en ce que** le dispositif d'éjection (8, 76) est doté d'un dispositif de manoeuvre (37a) individuellement actionnable.

15. Installation selon l'une quelconque des revendications 1 - 14, **caractérisée en ce que** le convoyeur à bande aspirante (2, 52) comporte un moteur d'entraînement (13, 53) individuellement actionnable pour la bande aspirante (11, 54), **en ce que** chaque dispositif de couchage (5, 70) est doté d'un moteur d'entraînement (26, 68) individuellement actionnable pour sa tête de couchage (23, 69), **en ce que** chaque tête de distribution (17, 31, 72) de biscuits est dotée d'un moteur d'entraînement (19, 33, 71) individuellement actionnable pour son dispositif de transfert (18, 32) déplaçable en continu et **en ce qu'**il est prévu un dispositif de commande (47, 80) électronique actionnant et synchronisant individuellement chacun des moteurs d'entraînement (19, 33, 71) qui est relié avec tous les dispositifs d'inspection (4, 7, 59, 67, 75) et avec le dispositif de manoeuvre (37a) individuellement actionnable du dispositif d'éjection (8, 76).

16. Installation selon la revendication 15, **caractérisée en ce que** chaque tête de couchage (23, 69) est dotée d'un dispositif de dosage (23a, 70a) individuellement actionnable pour la masse de remplissage et **en ce que** le dispositif de dosage (23a, 70a) est relié avec le dispositif de commande (47, 80) électronique.
